# EUROPEAN PATENT SPECIFICATION

(11) **EP 3 143 874 B1**
(45) Date of publication and mention of the grant of the patent: **20.11.2019**
(21) Application number: 15185505.3
(22) Date of filing: 16.09.2015
(51) Int. Cl.: A01N 31/02, A01N 25/18

(54) **PHEROMONE PREPARATION AND METHOD FOR PROTECTING TREE SPECIES AGAINST MONOCHAMUS GALLOPROVINCIALIS**
PHEROMON-PRÄPARAT UND METHODE ZUM SCHUTZ VON BAUMARTEN GEGEN MONOCHAMUS GALLOPROVINCIALIS
PRÉPARATION DE PHÉROMONE ET MÉTHODE POUR LA PROTECTION D'ESPÈCES D'ARBRES CONTRE MONOCHAMUS GALLOPROVINCIALIS

(43) Date of publication of application: 22.03.2017
(73) Proprietor: Fytofarm, spol. s r.o., 84508 Bratislava (SK)
(72) Inventor: VARKONDA, Stefan, 82103 Bratislava (SK); UJHELYIOVÁ, Liana, 925 23 Jelka (SK); WITASEK, Peter, A-9560 Feldkirchen (AT)
(74) Representative: Cechvalova, Dagmar

(56) References cited:
- EP-A2- 0 846 671
- EP-A2- 2 517 561
- WO-A1-01/04078
- KR-A- 20090 065 005
- KR-B1- 101 530 827
- A. N. WRIGLEY ET AL: "Higher Alkyl Monoethers of Mono- to Tetraethylene Glycol 2a,b", THE JOURNAL OF ORGANIC CHEMISTRY, vol. 25, no. 3, 1 March 1960 (1960-03-01), pages 439-444, XP55106338, ISSN: 0022-3263, DOI: 10.1021/jo01073a034
- JUAN A PAJARES ET AL: "Identification and Field Activity of a Male-Produced Aggregation Pheromone in the Pine Sawyer Beetle, Monochamus galloprovincialis", JOURNAL OF CHEMICAL ECOLOGY, KLUWER ACADEMIC PUBLISHERS-PLENUM PUBLISHERS, NE, vol. 36, no. 6, 2 May 2010 (2010-05-02), pages 570-583, XP019822721, ISSN: 1573-1561
- JORGE E. MACIAS-SAMANO ET AL: "2-Undecyloxy-1-ethanol in combination with other semiochemicals attracts three Monochamus species (Coleoptera: Cerambycidae) in British Columbia, Canada", THE CANADIAN ENTOMOLOGIST, vol. 144, no. 06, 11 October 2012 (2012-10-11), pages 764-768, XP55084363, ISSN: 0008-347X, DOI: 10.4039/tce.2012.77
- YEW JOANNE Y ET AL: "Insect pheromones: An overview of function, form, and discovery", PROGRESS IN LIPID RESEARCH, vol. 59, 14 June 2015 (2015-06-14), pages 88-105, XP029258977, ISSN: 0163-7827, DOI: 10.1016/J.PLIPRES.2015.06.001

## Description

### Field of the invention

Invention relates to the pheromone preparation for protection of wood species against Monochamus galloprovincialis pest and the method of wood species protection against that pest.

### Background of the invention

Several insect species from Cerambycidae family are potential economic wood species pests. They devalue especially technical features of wood, they are vectors of nematodes causing vascular system diseases and subsequent withering and perishing of coniferous wood species. They attack mostly perished and perishing trees. They include for example Pinus silvestris and others.

The economically most important pests include *Monochamus galloprovincialis,* causing problems especially in South Europe, and also other species of this genus. In case of protection against its unwanted occurrence the insecticides are being used. From among ecologically acceptable methods the use of attractants and pheromone traps reaches commercial level.

2-undecyloxy-1-ethanol is being used in fight against this pest. It is declared as a natural pheromone - monochamol of *Monochamus galloprovincialis* species - see ES 2 334 763 B1 (also published as EP 2 517 561 A2), which is considered to be closest prior art.

On the other hand, several documents in the prior art disclose a composition comprising 2-dodecyloxy-1-ethanol, including KR 2009 0065005 and EP 0 846 671 A2, but do not disclose any pherom onal activity thereof.

Attracting effects of some terpenes, for example α-pinene terpene alcohols, for example, ipsenol and mixtures of monochamol and such substances with alcohols, such as ethanol, methylbutenol are known on that pest. Such substances used as lures formulated, for example, as foil evaporators can reach attractive effects suitable for mass trapping of this pest also in practical conditions. As an example we can mention Galloprotect - 2D with content of monochamol, i.e. aggregating pheromone 2-undecyloxy-1-ethanol and kairomones 2-methyl-3-buten-1-ol and ipsenol, or Galloprotect 2D Plus, with content of monochamol, i.e. aggregating pheromone 2-undecyloxy-1-ethanol and kairomones 2-methyl-3-buten-1-ol, ipsenol and even ∀-pinene. Both commercial preparations are produced by the SEDQ company, Spain.

It is currently necessary to prepare other active preparations against Monochamus galloprovincialis.

### Summary of the invention

In connection to dealing with this problem it was found out that the effects comparable with pheromone effects of monochamol are shown by synthetic etheric ethanol derivative 2-dodecyloxy-1-ethanol. Its pheromone and chemo-communication effects are a pre-requisite for successful preparations based on the derivative that can reach attractive effects comparable with the above mentioned commercially known preparations Galloprotect 2D and Galloprotect 2D Plus, with natural pheromone monochamol used as the basic active component, see patent ES 2 334 763 B1.

Furthermore, it was found out that this synthetic etheric ethanol derivative as a separate substance or in mixtures with other active substances is suitable for use in any application form. In case of application formulation as a dispenser the application form of tubus with regulated diffusion of active mixture directly through semi-permeable wall into outer environment is suitable. If adjusted as described above it can be used as an evaporator in practical conditions.

The efficiency of this synthetically prepared product was verified in practical conditions, as proved by the following examples. In order to simplify the text the abbreviations were allocated to particular active substances, or established expressions were used. The abbreviations used in examples mean:
- UDOE: 2-undecyloxy-1-ethanol-trivial name: monochamol
- DDOE: 2-dodecyloxy-1-ethanol
- 2Me3BE2OL: 2-methyl-3-buten-2-ol
- Me3BE1OL: methyl-3-buten-1-ol

### Examples

### Example 1

In initial experiments in controlled conditions the biological effects of synthetically prepared ethanol derivative DDOE were verified with selected attractants with already known biological effects on this pest.

Particular substances were applied on carrier made of pulp and placed in plastic mini test tube, so called eppendorf test tube, and after opening they were tested in laboratory "ypsilon" olfactometer. Attractive effect was assessed based on insect reaction - active motion against odor flow of active substances released from the test tube (eppendorf). The insects obtained in pinewood using the traps were used in the test. The results are an average of four reruns.

| | |
|---|---|
| UDOE (monochamol) | ++++ motion up to the source |
| DDOE | ++++ motion up to the source |
| Ipsenol | +++ motion for a distance shorter than half of the distance from the source |
| Ipsdienol | ++ reaction and motion cca. 1-2 cm distance |
| Myrcene | ++ reaction and motion cca. 1-2 cm distance |
| Alphapinene | ++++ motion up to the source |
| Ethanol | ++ reaction and motion max 1-1,5cm |
| 2Me3BE2OL | + irritation and short motion |
| 2Me3BE1OL | + irritation and short motion |

### Example 2

Field experiments were performed in season 2012 and 2013 in Portugal and Spain. Attractive effects of DDOE and UDOE mixtures with attractants and kairomones applied in tubus formulations with work name T5G were monitored. Variant with UDOE (monochamol) serves as a comparing standard.

### Experiment methodology

Tubus evaporators were placed in funnel traps hanging on pine branches in 6m height, position of evaporators was changed every week, right after inspection and collection of trapped nematodes.

### Tested evaporators

| | | |
|---|---|---|
| Sample | 1T5G (standard) | UDOE+ipsenol+2-methyl-3-buten-2-ol+∀-pinene |
| Sample | 3T5G | DDOE+ ipsenol+2-methyl-3-buten-2-ol+∀-pinene |

### Results:

| | Average number of trapped Monochamus galloprovicialis |
|---|---|
| 1T5G (standard) | 22 |
| | |
| 3T5G | 28 |

### Example 3

In Portugal attractive effects of DDOE, UDOE in mixtures with attractants and kairomones applied in tubus formulation with work name T5G were verified. Commercial pheromone preparation Galloprotect 2D Plus (monochamol, i.e.. 2-undecyloxy-1-ethanol and 2-methyl-3-buten-1-ol, ipsenol and V-pinene) was used as a comparing standard.

### Experiment methodology

Tubus evaporators and standard were placed in funnel traps hanging on pine branches, in 6m height, position of evaporators was changed every week, right after inspection and collection of trapped nematodes.

### Tested evaporators

| | | |
|---|---|---|
| Sample | 1T5G | UDOE+ ipsenol+2-methyl-3-buten-2-ol+∀-pinene |
| Sample | 3T5G | DDOE+ ipsenol+2-methyl-3-buten-2-ol+∀-pinene |
| Standard | Galloprotect 2D Plus | |

Average traps of *Monochamus galloprovincialis* using evaporators containing UDOE, i.e. 1T5G variant and standard - Galloprotect 2DPlus were 23±13,7 and 42±8,4 pieces per trap. Variant with 3T5G (DDOE) formulation showed average trap of 28±8,2 pieces per trap, and it was statistically comparable with the used standard.

### Example 4

Three types of experimental evaporators with the same active mixture containing DDOE were prepared, namely in formulation of tubus and aluphan bag with release of active substance via wick, i.e. dispenser used for production of pheromone evaporators of ECOLURE KLASIK line as a standard and polyethylene bag evaporator with pulp tampon used for production of e.g. pheromone evaporators of ECOLURE F line. The evaporator prepared in tubus formulation was called Gallowit New and the evaporator - aluphan bag with wick was called MG-ECOLURE beta, and the evaporator made of polyethylene bag was called MG-ECOLURE F.

In all three experimental preparations the same active mixture with content of active substances was used:

| | Content in % |
|---|---|
| DDOE | 0,8 |
| ipsenol | 1,3 |
| ipsdienol | 1,3 |
| myrcene | 2,5 |
| α-pinene | 33 |
| ethanol | 26,2 |
| methylbutenol | 34,9 |

### Example 5

Attractive effects of tubus formulation with DDOE with work name Gallowit New were verified in season 2013 in Spain. As a comparing standard the commercial Galloprotect 2D Plus containing monochamol- UDOE was used.

### Experiment methodology

### Variants

### Gallowit New

| | Content in % |
|---|---|
| DDOE | 0,8 |
| ipsenol | 1,3 |
| ipsdienol | 1,3 |
| myrcene | 2,5 |
| α-pinene | 33 |
| ethanol | 26,2 |
| methylbutenol | 34,9 |

### Galloprotect 2D Plus

UDOE 2-undecyloxy-1-ethanol
2-methyl-3-buten-1-ol, ipsenol α-pinene.

Tubus evaporators Gallowit New and commercial evaporators Galloprotect 2D Plus (standard) were placed in funnel traps hanging on pine branches in 6m height, position of evaporators was changed every week, right after inspection and collection of trapped nematodes.

Total number of trapped insects from 16 traps lured by evaporators made

| | | |
|---|---|---|
| Gallowit New | 1046 | 80 % |
| Galloprotect 2D | 1288 | 100 % |

### Example 6

Attractive effects of tubus and aluphan bag and polyethylene bag formulation with DDOE with work name Gallowit New, MG-ECOLURE beta, or MG-ECOLURE F were verified in season 2014 in location Malá Lehota in Slovakia. As a comparing standard the commercial Galloprotect 2D Plus containing monochamol- UDOE was used.

### Experiment methodology

### Variants

Gallowit New 4 pieces
MG-ECOLURE beta 4 pieces
MG-ECOLURE F 4 pieces
Galloprotect 2D Plus (SEDQ, Spain) 4 pieces
Trap: ECOTRAP (Fytofarm, SR) 16 pieces

Evaporators Gallowit New and MG-ECOLURE beta, MG-ECOLURE F and commercial evaporators Galloprotect 2D Plus (standard) were placed in barrier traps ECOTRAP close to pines, position of evaporators was changed every week right after inspection and collection of trapped nematodes.

Total number of trapped insects from 4 traps lured by evaporators made

| | | |
|---|---|---|
| Gallowit New | 26 | 104 % |
| MG-ECOLURE | 17 | 68 %. |
| MG-ECOLURE | 22 | 88 % |
| Galloprotect | 25 | 100 % |

The above examples confirm comparable effect of synthetic etheric ethanol derivative with natural attractant of the Monochamus galloprovicialis pest - monochamol.
These examples are of illustrative nature, and it will be obvious to a professional working in the branch that the quantitative representation of active component itself and the representation of other particular active substances of attractants and kairomones in the mixture with this ethanol derivative may be variant, provided that the required effect comparable with the preparation from the technology situation is preserved.

### Industrial applicability

Synthetically prepared pheromone substance as a chemical individual, preparation with content of such substance or with content of mixtures with other active substances, attractants and kairomones are intended for use in protection of wood species against Monochamus galloprovicialis pest.

## Claims

1. Evaporator for wood species protection against Monochamus galloprovincialis pest, in a formulation selected from tubus formulation, formulation of aluphan bag evaporator with wick, formulation of plastic bag evaporator with tampon, ***characterized in that*** it comprises 2-dodecyloxy-1-ethanol.

2. Use of 2-dodecyl-1-ethanol for protection of wood species against pests of Monochamus galloprovicialis genus as a separate preparation or in mixture with one or several compounds from the group including ipsenol, ipsdienol, myrcene, α- pinene, ethanol and methylbutenol.

3. Use of 2-dodecyl-1-ethanol for protection of wood species against pests of Monochamus galloprovicialis genus according to the claim 2, in mixture with the following content of components:
| | Content in % |
|---|---|
| 2-dodecyloxy-1-ethanol | 0,8 |
| ipsenol | 1,3 |
| ipsdienol | 1,3 |
| myrcene | 2,5 |
| α-pinene | 33 |
| ethanol | 26,2 |
| methylbutenol | 34,9 |

## Patentansprüche

1. Verdampfer zum Schutz von Holzarten gegen Schädlinge Monochamus galloprovincialis, in einer Formulierung ausgewählt aus der Tubusformulierung, der Formulierung Aluphan-Beutelverdampfer mit Docht, der Formulierung Plastikbeutelverdampfer mit Tampon, **dadurch gekennzeichnet, dass** der Verdampfer 2-Dodecyloxy-1-ethanol enthält.

2. Verwendung von 2-Dodecyl-1-ethanol zum Schutz von Holzarten gegen Schädlinge der Gattung Monochamus galloprovicialis als separate Zubereitung oder in einer Mischung mit einer oder mehreren Verbindungen aus der Gruppe umfassenden Ipsenol, Ipsdienol, Myrcen, α-Pinen, Ethanol und Methylbutenol.

3. Verwendung von 2-Dodecyl-1-ethanol zum Schutz von Holzarten gegen Schädlinge der Gattung Monochamus galloprovicialis gemäß Anspruch 2, in einer Mischung mit folgendem Gehalt an Bestandteilen:
| | Inhalt in % |
|---|---|
| 2-Dodecyloxy-1-ethanol | 0,8 |
| Ipsenol | 1,3 |
| Ipsdienol | 1,3 |
| Myrcen | 2,5 |
| α-Pinen | 33 |
| Ethanol | 26,2 |
| Methylbutenol | 34,9 |

## Revendications

1. L'évaporateur de protection des espèces d'arbres contre les organismes nuisibles du genre Monochamus galloprovicialis, dans la formulation qui ressort de la formulation tubus, de la formulation évaporateur portable aluplastique à mèche, de la formulation évaporateur portable plastique à tampon, **caractérisé par le fait que** l'évaporateur comprend 2-dodécyloxy-1-éthanol.

2. L'usage du 2-dodécyl-1-éthanol pour protection des espèces d' arbres contre des organismes nuisibles du genre Monochamus galloprovicialis, sous forme du produit individuel ou d'un composant de mélange avec un autre composé ou des autres composés du groupe comprenant de l'ipsénol, ipsdiénol, myrcène, α-pinène, éthanol et méthyl-buténol.

3. L'usage du 2-dodécyl-1-éthanol pour protéction des espèces d' arbres contre des organismes nuisibles du genre Monochamus galloprovicialis selon la revendication 2, dans le mélange dont le contenu des composés est le suivant:
| | Contenu % |
|---|---|
| 2-Dodécyloxy-1-éthanol | 0,8 |
| Ipsénol | 1,3 |
| Ipsdiénol | 1,3 |
| Myrcène | 2,5 |
| α-pinène | 33 |
| Éthanol | 26,2 |
| Méthyl-buténol | 34,9 |
